# EUROPÄISCHE PATENTSCHRIFT

(11) **EP 2 009 329 B1**
(45) Veröffentlichungstag und Bekanntmachung des Hinweises auf die Patenterteilung: **14.09.2011**
(21) Anmeldenummer: 08103312.8
(22) Anmeldetag: 02.04.2008
(51) Int. Cl.: F16H 61/46, B60K 28/16, B60W 30/18, F16H 61/42, F16H 59/50, F16H 59/52

(54) **Elektronische Steuerung für die hydrostatische Antriebseinheit eines Fahrzeugs**
Electronic control for the hydrostatic drive unit of a vehicle
Commande électronique pour l'unité d'entraînement hydrostatique d'un véhicule

(30) Priorität: 27.06.2007 DE 102007030168
(43) Veröffentlichungstag der Anmeldung: 31.12.2008
(73) Patentinhaber: CLAAS Selbstfahrende Erntemaschinen GmbH, 33428 Harsewinkel (DE)
(72) Erfinder: Gersmann, Manfred, 48231, Warendorf (DE); Dückinghaus, Heinrich, 33649, Bielefeld (DE)

(56) Entgegenhaltungen:
- EP-A- 1 716 737
- WO-A-92/18345
- DE-A1- 3 620 163
- DE-A1- 10 350 117
- GB-A- 2 351 716
- US-A- 3 374 847

## Beschreibung

### Technisches Gebiet

Die vorliegende Erfindung bezieht sich allgemein auf das Gebiet der Landwirtschaft und der Verarbeitung von Ernteerzeugnissen. Hierzu werden Fahrzeuge, insbesondere selbstfahrende landwirtschaftliche Erntemaschinen, welche zur Aufnahme der Ernte und zur Verarbeitung des Gutes dienen, eingesetzt. Bei den selbstfahrenden landwirtschaftlichen Erntemaschinen handelt es sich in der Regel um Mähdrescher, Feldhäcksler und alle Arten von Rodern, die mit elektronischen Steuerungseinrichtungen für Antriebseinheiten ausgestattet sind. Einige Antriebseinheiten betreffen den Fahrantrieb, wobei der Fahrantrieb aus einem Allradantrieb besteht, der auf alle, den Boden berührender Räder einwirkt, wobei die Vorderräder einer Erntemaschine auch aus einem Raupenlaufwerk mit jeweils zwei großen Umlenkrädern bestehen können. Der Antrieb der Räder erfolgt über einen Hauptmotor beispielsweise in Ausführung einer Verbrennungsmaschine, einer Hydraulikpumpe und mindestens einem Hydraulikmotor, der mit der Hydraulikpumpe in Verbindung steht und die hydraulische Energie in mechanische Arbeit umwandelt und mindestens ein Rad antreibt, welches mit dem Boden im Eingriff steht. Elektronische Steuerungen und Aktoren übernehmen das Steuern- und Regeln der hydraulischen Motoren, die als Antriebseinheiten sowohl Vorder- wie Hinterräder mittels hydrodynamischer Kraftübertragung antreiben. Um eine gute Traktion und geringen Schlupf der Räder zur Bodenfläche zu erreichen, werden Steuereinrichtungen eingesetzt, die das Antriebsdrehmoment an den Rädern steuern. Zur Steuerung der Antriebsdrehmomente werden an entsprechenden Stellen in den selbstfahrenden Erntemaschinen Sensoren eingesetzt, deren Signale von den Steuereinrichtungen verarbeitet werden.

### Hintergrund im Stand der Technik

Um die Traktion von Fahrzeugen zu erhöhen und den Reifenschlupf zwischen dem Antriebsrad und dem Untergrund zu verringern, sind aus dem Stand der Technik verschiedene Systeme bekannt.

Als erstes wäre der Allradantrieb zu nennen, bei der die Motorkraft eines Fahrzeuges, ganz im Gegensatz zum Front- oder Heckantrieb, auf alle Boden berührenden Räder einwirkt, um eine gewisse Geländegängigkeit überhaupt zu ermöglichen. Ein Allradantrieb wird zur Erhöhung der Traktion durch Aufteilung der Antriebsmomente und Verbesserung der Fahrstabilität eingesetzt und ist hinreichend aus dem Stand der Technik bekannt. Bei Fahrzeugen mit permanentem Allradantrieb wird die Motorleistung ständig auf alle vier Räder übertragen und durch Differenziale, wird der vollständige Drehzahlausgleich ohne Leistungsverluste gewährleistet. Um Verspannungen im Antriebsstrang zu vermeiden wird ein zusätzliches Zentraldifferenzial zwischen Vorder- und Hinterachse eingebaut. Der Nachteil hierbei ist jedoch, dass bei zu geringer oder fehlender Bodenhaftung eines einzelnen Rades oder einer Achse das übertragbare Antriebsmoment durch dieses Rad oder diese Achse begrenzt wird, wodurch ein Fahrzeug im Extremfall nicht mehr aus eigener Kraft bewegt werden kann.

Abhilfe schafft ein spezielles Getriebe und eine elektronische Steuerung VDC (Vehicle Dynamic Control). Das spezielle Getriebe gleicht die unterschiedliche auftretende Gewichtsverteilung auf die Achsen der landwirtschaftlichen Fahrzeuge dadurch aus, dass die Kraft, beispielsweise im Verhältnis 35:65 zwischen Vorder- und Hinterachse, aufgeteilt wird und die elektronische Steuerung vergleicht die Raddrehzahlen und den vom Fahrer vorgegebenen Lenkwinkel und kann so ein Über- und Untersteuern erkennen und die Kraftverteilung so verändern, dass das Fahrzeug ein neutrales Eigenlenkverhalten beibehält

Die DE 199 21 856 A1 offenbart einen hydrostatisch- mechanischen Allradantrieb für mehrachsige Fahrzeuge, der es erlaubt, die Fahrantriebsleistung unter Berücksichtigung der zwischen den Fahrzeugreifen und dem Boden gegebenen Traktion auf die Fahrachsen zu verteilen. Der dargestellte Antrieb gewährleistet eine selbstständige stufenlose Einstellung der Drehzahlverhältnisse, kann aber auch über einen Reglereingriff in Abhängigkeit vom Lenkwinkel noch unterstützt werden, wodurch eine Drehmomentaufteilung auf die Antriebsachsen durch Veränderung der Drehzahlverhältnisse erfolgt und Verspannungen, wie zuvor aus dem Stand der Technik beschrieben, auch bei engen Kurvenfahrten vermieden werden. Die Leistungsverteilung erfolgt, um den Schlupf aller angetriebenen Räder auch bei einer Laständerung an den Fahrzeugachsen möglichst gleich zu halten

Der Nachteil dieses Antriebssystems besteht darin, dass die Steuer- und Regeleinrichtung nur wenige Parameter des Fahrzeuges erfasst und damit die Leistungsverteilung durch Verstellung der Hydraulikmotoren nicht für alle Fahr- und Erntebedingungen erfolgt.

Die vorgenannte Steuer- und Regeleinrichtung ist eine ASR (Antischlupfregelung), auch TCS (traction control system) genannt und aus dem Stand der Technik bekannt. Die Antischlupfregelung sorgt dafür, dass die Räder beim Beschleunigen nicht durchdrehen. Beim Anfahren mit zuviel Gas oder bei schlechtem Untergrund mit wenig Haftreibung, sehr häufig in der Landwirtschaft anzutreffen, können ein oder mehrere Räder durchdrehen und das Fahrzeug eine instabile Fahrtrichtung einnehmen. Das Durchdrehen ein oder mehrerer Räder zum Boden wird als Reifenschlupf bezeichnet. Um eine maximale Übertragung von Reibkraft zwischen den Reifen und den verschiedenen Untergründen auf Feldböden und unterschiedlichen Witterungsbedingungen zu ermöglichen, wird eine "ASR" eingesetzt, um das Durchdrehen der Räder und/oder auch ein Unter- und Übersteuern des Fahrzeuges zu verhindern. Droht ein zu starker Schlupf der Antriebsräder, wird das Antriebsmoment durch geziehen Brems- und/oder Motormanagementeingrirf reguliert. Das Regelsystem, das seine Informationen unter anderem über die ABS-Raddrehzahlsensoren erhält, gewähneistet damit Traktion und Fahrstabilität während der Beschleunigungsphase auf gerader Strecke, als auch bei Kurvenfahrt, wobei ABS für Antiblockiersystem steht und ebenfalls die Verbesserung der Fahrsicherheit der landwirtschaftlichen Fahrzeuge erhöht. Es wirkt vor allem in bestimmten Situationen, indem es bei starkem Bremsen der Blockierneigung der Räder durch Regelung des Bremsdruckes in kurzen Intervallen entgegenwirkt. Das "ABS" ist in der Lage, das Bremsverhalten jedes einzelnen Rades nahezu optimal zu steuern, Auch das ESP (elektronische Stabilitätsprogramm) verhindert, mittels elektronischer Sensoren, deren Signale in einem System ausgewertet und verarbeitet werden, durch gezieltes Bremsen einzelner Räder den Schlupf und das Unter- sowie Übersteuern eines Fahrzeuges, Das System ermittelt so das Fahrzeugverhalten und greift dann ein, wenn eine Abweichung zur Einstellung der Fahrerinformationen festgestellt wird, wobei auch die Lenkwinketänderung mit berücksichtigt wird, Das Abbremsen bei Hydraulikmotoren kann durch Änderung des Volumenstromes der Hydraulikflüssigkeit erfolgen,

Die "ESP"-, "ASR"- und "ABS"- Steuerungen erfüllen aber nicht die Anforderungen die an Antriebsräder von Fahrzeugen gestellt werden, insbesondere an landwirtschaftliche Erntemaschinen, eine optimale Traktion so einzustellen und so zu begrenzen, dass ein Schlupfen der Reifen beim situationsbezogen Emteeinsatz ausreichend vermieden werden kann.

Aus der EP 1 350 658 B1 ist eine Steuerungseinrichtung für einen hydraulischen Allradantrieb bekannt, welche Aktoren, mittels von Sensoren (Drehzahl- und Drucksensor) erzeugten Signalen, steuert, wobei die Aktoren Einfluss auf zwei antreibbare Achsen bzw. an den Achsen zugeordneten Hydraulikmotoren, durch Änderung des Schluckvolumens, nehmen, um eine optimale Traktion an den Antriebsrädern zu erreichen. Diese Steuerung berücksichtigt nicht nur das vorgenannte Fahrverhalten, sondern auch die Lastverteilung auf die vordere- und hintere Achse bei Bergauf- und Bergabfahrten, wodurch der bekannte Backspin- Effekt vermieden werden kann. Dem bei Bergauf- und Bergabfahrten stattfindenden Lastwechsel auf den Achsen wird durch Änderung der Antriebsleistung an den Rädern entgegengewirkt. Eine tatsächliche Ermittlung der Achslasten erfolgt aber nicht, sondern es wird über einen Drucksensor, dessen Signal eine Information über den Druckunterschied zwischen Einlass- und Auslasskanal am Hydraulikmotor enthält und dem Drehzahlsensorsignal der Betriebszustand des Hydraulikmotors ermittelt Anhand des Signals des Drucksensors ist erkennbar, ob das Rad das Fahrzeug antreibt oder ob das Rad durchdreht. Der Nachteil in diesem System besteht darin, dass nicht frühzeitig ein Durchdrehen eines oder mehrerer Räder erkannt, sondern erst bei auftretendem Schlupf gegengesteuert werden kann.

Die EP 1 232 682 B1 beschreibt eine elektronische Motorsteuerung, welche einen Verbrennungsmotor steuert. In der Steuerung sind Leistungskurven zur Steuerung des Verbrennungsmotors abgespeichert. Die Leistungskurven enthalten Informationen über die Leistung des Motors, in Abhängigkeit von verschiedenen Parametern, z.B. Motordrehzahl, Temperatur, Antrieb der Einrichtungen usw. Erfindungsgemäß enthält die Steuerung Maschinenparameter zu Erntegutbergungsvorrichtungen. Der Wechsel einer Erntegutbergungsvorrichtung wird durch Sensoren erfasst, wobei ein Sensor aus einem Schalter im Fahrerhaus bestehen kann, der durch den Fahrer bedient wird. Der Wechsel einer Erntegutbergungsvorrichtung führt in der Motorsteuerung zu einem Wechsel der Leistungskurve für den Verbrennungsmotor. Durch den Wechsel der Leistungskurve wird die Leistung des Verbrennungsmotors entweder herauf- oder heruntergeregelt. Die Leistung des Verbrennungsmotors wird somit in Abhängigkeit des verwendeten Vorsatzgerätes geregelt. Eine Regelung des Antriebsmomentes der einzelnen Antriebsräder an den Hydraulikmotoren findet aber nicht statt.

Die EP-A-1 716 737 offenbart, dass die Fahrzeuggeschwindigkeit über Grund und die verschiedenen Radgeschwindigkeiten via Sensoren ermittelt werden, der jeweilige Schlupf bestimmt und schließlich das den Rädern zugeführte Drehmoment entsprechend der ermittelten Schlupfwerte geändert wird. Mithin wird zunächst ein auftretender Schlupf abgewartet und sodann eine Momentregelung vorgenommen.

Die EP-A-1 716 737 offenbart eine klassische Schlupfregelung, die die Wirkung beseitigt, nicht aber die Ursache, nämlich das die dem jeweiligen Rad zugeführten Drehmomente nicht effizient übertragen werden können, weil sie in Abhängigkeit von den Eigenschaften des Untergrundes und der Räder selbst nicht übertragbar sind.

Die GB-A-2 351 716 offenbart eine Drehmomentsteuerung für die Antriebsräder eines (landwirtschaftlichen) Fahrzeugs, deren Ziel es ist, Schlupf zu reduzieren, um unter anderem Grasnaben nicht zu beschädigen. D2 schlägt nun vor, die Schlupfregelung in Abhängigkeit von der jeweiligen Achs-/Radlast abhängig zu machen, wobei neben Gewichtssensoren auch Neigungssensoren zum Einsatz kommen (siehe Ansprüche D2).

Eine solche Schiupfsteuerung berücksichtigt ausschließlich die von der Fahrzeugneigung abhängige Verteilung der Fahrzeugmasse auf die einzelnen Räder.

Die DE 103 50 117 A1 offenbart ein Schlupfsteuerungssystem, bei dem in Abhängigkeit von Bodeneigenschaften die Fahrgeschwindigkeit gesteuert werden kann. Dabei wird die maximal zulässige Fahrgeschwindigkeit voreingestellt und hängt von der Beurteilung des Betreibers ab. Eine derartige Steuerstrategie geht von dem Ansatz aus, dass die Schlupfgefahr mit steigender Rutschigkeit des Untergrunds und/oder mit zunehmender Fahrgeschwindigkeit steigt. Die Steuerung ist dabei auf maximal zulässige und minimal zulässige Fahrgeschwindigkeiten in Abhängigkeit von den Eigenschaften des Bodens beschränkt.

Der Erfindung liegt daher die Aufgabe zugrunde, eine Steuerungseinrichtung der eingangs genannten Art zu schaffen, welche die genannten Nachteile der bekannten Steuerungen aus dem Stand der Technik vermeidet und eine technische Lösung anzugeben, die es ermöglicht, das Antriebsmoment der Antriebsräder so zu begrenzen, dass ein Schlupfen der Räder bzw, der Reiten zum Untergrund vermieden und ein maximal mögliches Antriebsmoment übertragen werden kann. Bei selbstfahrenden landwirtschaftlichen Erntemaschinen mit vier Antriebsrädern ist das Zusammenspiel der einzelnen Antriebsräder bei unterschiedlichen Traktionsbedingungen daher von großer Bedeutung.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen.

### Beschreibung

Um Fahrzeuge mit einer elektronischen Steuerungseinrichtung für Fahrantriebe mit den Merkmalen der vorliegenden Erfindung auszustatten, insbesondere selbstfahrende landwirtschaftliche Erntemaschinen, wird erfindungsgemäß vorgeschlagen, zur Optimierung der Traktion und Verhinderung des Schlupfes an wenigstens einem Rad, eine einsatzabhängige Vorgabe des Drehmomentes am Hydraulikmotor vorzusehen. Vorteilhaft wird hierbei das eingestellte Drehmoment am Hydraulikmotor bei sich ändernden Einsatzbedingungen an die Einsatzbedingungen angepasst, wobei ein Schlupfen beziehungsweise Durchdrehen des Rades vermindert und sogar verhindert wird. Der Einsatz des Fahrzeug bestimmt vorteilhaft die Vorgabe des Raddrehmomentes, wobei unter dem Einsatz die Ausstattung beziehungsweise die Einsatzbedingungen des Fahrzeugs zu verstehen ist.

Die Steuerungssysteme aus dem Stand der Technik, beispielsweise "ASR", können den Schlupf erst dann begrenzen, wenn dieser messbar an einem Antriebsrad auftritt, wobei dann beispielsweise eine Beschädigung der Grasnarbe bei der Erntegutaufnahme im Einsatz der Erntemaschine auf einer Weise, bereits eingetreten ist.

Das erzeugte Drehmoment des Hydraulikmotors ist abhängig von der Drehzahl, wobei die Drehzahl vom zugeführten Volumenstrom und dessen Druck, der von der Hydraulikpumpe zugeführt wird, und vom Schluckvolumen abhängig ist, während das durch den Hydraulikmotor erzeugte Antriebsmoment für das Antriebsrad durch den Lastdruck und (dem) Schluckvolumen bestimmt wird. Unter Schluckvolumen versteht man in der Fluidtechnik bei Hydraulikmotoren jene Menge an Hydraulikflüssigkeit, die der Hydraulikmotor pro Umdrehung verbraucht. Bei regelbaren Hydraulikmotoren, wie hier in Rede stehend, ist das Schluckvolumen variabel. D.h., die vom Hydraulikmotor abgegebene Leistung an das Antriebsrad ist proportional dem Schluckvolumen, der Drehzahl und dem Druckgefälle. Das Produkt aus Schluckvolumen und Drehzahl ergibt den Volumenstrom, wobei das Druckgefälle der Unterschied zwischen dem Druck der zulaufenden Hydraulikflüssigkeit von der Hydraulikpumpe und dem Druck der ablaufenden Flüssigkeit des Hydraulikmotors ist. Daraus abgeleitet ergibt sich ein weiteres erfindungsgemäßes Erfordernis, die einsatzabhängige Vorgabe des Schluckvolumenvorgabe am Hydraulikmotor, da diese proportional der Vorgabe des Drehmoments und proportional der abgegebenen Leistung des Hydraulikmotors ist. Die Bestimmung der Vorgabe des Drehmoments beziehungsweise die Schluckvolumenvorgabe, die ein maximal zulässiges Raddrehmoment für ein oder mehrere Räder vorgeben soll, erfolgt aus der Erfassung weiterer Daten und/ oder wird durch Sensoren abgegebenen Signalen gebildet. Die Erfassung der Daten und/oder Signale erfolgt in einer erfindungsgemäßen elektronischen Steuerungseinrichtung, welche die Daten und Signale auswertet und daraus eine Schluckvolumenvorgabe für die hydraulischen Hydraulikmotoren berechnet. Die Sensorsignale stammen beispielsweise von an den Antriebsachsen befindlichen Drehzahlaufnehmern, Die Daten hingegen setzen sich aus Maschinenparametern zusammen, die aus statischen und dynamischen Maschinenparametern gebildet werden, weil die den Maschinenparameter zugrundesiegenden Vorrichtungen vorrangig auf die Radlast bzw. Traktion der Räder Einfluss nehmen. Die Vorrichtungen bilden die statische Maschinenausstattung, aus denen die radlastabhängigen Maschinenparameter gebildet werden. Zu den statischen Maschinenausstattungen gehört beispielsweise die an der selbstfahrenden Erntemaschine angeordnete Erntegutaufnahmevorrichtung, die mit Angabe der Typbezeichnung, Ausstattung und Arbeitsbreite, und somit mit unterschiedlichen Maschinenparametern, in die Steuerungseinnchtung eingeht. Auch der Maschinentyp des Fahrzeuges, die eingesetzten Reifen, sowie dessen Motorausstattung werden mit unterschiedlichen Maschinenparametern in der Steuerungseinrichtung berücksichtigt. Die wechselbaren Erntegutaufnahmevorrichtungen bestimmen deutlich die Rad- bzw. Achslast an den Antriebsrädern mit und nehmen somit gravierend Einfluss auf die Traktion und das Schlupfverhalten der Antriebsräder. Erfindungsgemäß wird daher vorgeschlagen, dass die Radlast wenigstens eines hydrostatisch angetriebenen Rades indirekt bestimmt und das Achs- bzw. Raddrehmoment in Abhängigkeit von der ermittelten Radiast eingestellt wird. Weitere statische Maschinenparameter, die als Daten in die Steuerungseinrichtung zur Berechnung der Steuerung der Schluckvolumenvorgabe der Antriebsräder eingehen, sind Zusatzgewichte, die beispielsweise aus der unterschiedlichen technischen Ausstattung der Erntemaschine im Heck resultieren. Des weiteren wird als Maschinenparameter die zu verarbeitende Erntegutart berücksichtigt, weil zwischen Gras, Mais, Getreide und andere sich wesentliche Unterschiede beim Gewicht für die Radiast und den Einsatzbodenbeschaffenheiten ergeben. Beim Einsatz, z,B, in der Grasernte, in trockener Wiese oder beim Grasschnitt mit wenig Bestand, sind hohe Vorfahrtgeschwindigkeiten mit noch ausreichender Zugkraft gefordert. Bei der Maisernte hingegen mit schweren, feuchten Boden und/ oder am Fahrzeug angehängtem Emteguttransportwagen, ist die volle Zugkraft bei geringer Vorfahrtgeschwindigkeit erforderlich. Diese unterschiedlichen einsatzabhängigen Anforderungen an die Traktion und somit an die hydraulischen Antriebseinheiten werden bei der erfindungsgemäßen Schluckvolumenvorgabe durch die Steuerungseinrichtung berücksichtigt.

Grundsätzlich werden die statischen Maschinenparameter aus der Maschinenausstattung ermittelt und in das Programm der Steuerungseinrichtung zur Berechnung der Vorgabe des Drehmomentes aufgenommen. Eine manuelle Änderung der statischen Maschinenparameter im Programm der Steuerungseinrichtung ist durch den Eingriff des Fahrers in einem Menupunkt des Bediensystems jederzeit möglich, wodurch immer eine Optimierung der Traktion und Reduzierung eines Schlupfes erfolgen kann.

Bei den "ASR" und "ESP" Steuerungen hingegen ist ein manueller Eingriff des Fahrers in die Steuerungen nicht möglich. Nur ein komplettes Zu- und Abschalten der Steuerungen ist gegeben.

Vorteilhafterweise werden auch die dynamischen Maschinenparameter in das Programm der Steuerungseinrichtung mit aufgenommen, um den Wert für die Schluckvolumenvorgabe gezielter berechnen zu können. Die dynamischen Maschinenparameter beziehungsweise deren zugrundeliegende veränderliche Masse, die veränderliche Richtung, Neigung und/ oder Fahrgeschwindigkeit des Fahrzeuges werden ermittelt, weil diese ebenfalls Einfluss auf die Rad- bzw. Achslast und somit Einfluss auf die Traktion beziehungsweise Schlupf der Räder nehmen. Die veränderlichen dynamischen Maschinenparameter werden daher erfindungsgemäß ebenfalls zur Berechnung der Schluckvolumenvorgabe mit herangezogen, um eine optimale Traktion am einzelnen Antriebsrad, oder an mehreren Antriebsrädern, jederzeit zu erhalten und einen Schlupf eines oder mehrerer Antriebsräder zu vermeiden. Veränderliche dynamische Maschinenparameter ergeben sich beispielsweise aus der veränderlichen Stellung der Erntegutaufnahmevorrichtung, der Fahrgeschwindigkeit und des Lenkwinkels des Fahrzeuges. Auch die Parameter der Fahrzeugneigung, wie aus der EP 1 350 658 B1 bekannt und der Fahrzeugbeschleunigung in Längs- und Querrichtung, wie aus der "ASR" bekannt, werden in der Steuerungseinrichtung berücksichtigt. Eine weitere Aufgabe der Erfindung zur Ermittlung der Achslast besteht darin, den veränderlichen Füllstand des Tankbehälters, sowie den veränderlichen Füllstand des Korntankes bei Mähdreschern zu erfassen und ebenfalls zu berücksichtigen. Des weiteren geht der dynamische Maschinenparameter der Pendelstellung der Achse in das Programm der Steuerungseinrichtung ein, Eine weitere Ausgestaltung der Erfindung beinhaltet eine indirekte Ermittlung der Radlast, z.B. über einen in der Pendelachsaufhängung angeordneten Lastsensor.

Diese veränderlichen dynamischen Maschinetiparameter werden mit Sensoren erfasst, deren Signale in der elektronischen Steuerungseinrichtung mit den Daten der statischen Maschinenparameter verarbeitet und aus denen die Werte für die Vorgabe des Drehmoment ermittelt werden. Mit den Werten der Drehmomentvorauswahl wird die Schluckvolumenvorgabe für die hydraulischen Antriebsmotoren geregelt. D.h., die aus den statischen und dynamischen Maschinenparametern berechnete Vorgabe des Drehmoments entspricht in etwa einer vorgegebenen Leistungskurve für den Hydraulikmotor, ähnlich der in einer Steuerungseinrichtung für den Verbrennungsmotor hinterlegten Leistungskurve. Die aus den Maschinenparametern berechnete und vorgegebene Leistungskurve für den Hydraulikmotor ist eine radlastabhängige Leistungskurve, die zur Einstellung des Antriebsdrehmoments durch Steuerung des Schluckvolumens mindestens eines hydrostatisch angetriebenen Rades dient und vorzugsweise bei allen Antriebsrädern Anwendung findet. Die Leistungskurve enthält Angaben, die auf die veränderliche Traktions- und Schlupfsituation jedes einzelnen Antriebsrades eingeht. Ändert sich beispielsweise die aktuelle Stellung der Erntegutaufnahmevorrichtung, verändert sich die Achslast auf der Vorder- sowie Hinterachse, wodurch sich ebenfalls die Traktion, das Lenkverhalten und die Schlupfbedingungen an den Antriebsrädern nachteilig ändern. Um diesen nachteiligen Änderungen entgegenzuwirken, erfolgt durch den erfindungsgemäß in der Leistungskurve enthaltenen dynamischen Maschinenparameter der Erntegutaufnahmevorrichtung, eine Änderung der Drehmomenteinstellung an den Antriebsmotoren. Die Änderung des Drehmomentes bewirkt an den hydraulischen Antriebsmotoren der Vorderachse durch Änderung der Schluckvolumenvorgabe eine Erhöhung der Zugkraft und an den Antriebsmotoren der Hinterachse eine Absenkung, wobei zu Beginn einer Kurvenfahrt noch eine Änderung des Drehmomentes zwischen dem linken und rechten Antriebsmotor hinzukommt, Hierbei wird die Schluckvolumenvorgabe der einzelnen Antriebsmotoren jederzeit so gesteuert, dass eine optimale Traktion an den Antriebsrädern eingestellt und ein nicht gewünschter Schlupf eines einzelnen Antriebsrades im Vorhinein durch die erfassten Einsatzbedingungen verhindert wird. Bei der Schluckvolumenvorgabe für die Hydraulikmotoren werden somit unterschiedlich auftretende Gewichtsverteilung auf die Achsen der Erntemaschine indirekt bestimmt, wobei eine einsatzabhängige Vorgabe durch eine automatische Drehmoment- Verteilung, auch bekannt als gesteuertes Längsdifferenzial, zwischen der Vorderachse und der Hinterachse erfolgt. Die Drehmoment- Verteilung kann zwischen 60 zu 40 bis 90 zu 10 variieren, vorzugsweise 80 zu 20, je nachdem mit welcher Maschinenausstattung die Erntemaschine ausgerüstet ist.

In einer einfachen Ausgestaltung der Erfindung, wird lediglich eine Vorgabe des Drehmomentes anhand der im Einsatz befindlichen Erntegutaufnahmevorrichtung erfindungsgemäß gesteuert, Um eventuellen Beobachtungen von Schlupf an den Rädern im Einsatz des Fahrzeugs durch den Maschinenbediener Rechnung tragen zu können, besteht für den Maschinenbediener die Möglichkeit, über das Bedienersystem in die Steuerungseinrichtung manuell eingreifen zu können. Vorteilhaft kann die Schluckvolumenvorgabe für jedes Rad beziehungsweise jede Achse sowie eine Vorgabe für die Achslastverteilung verändert werden und manuell die erfindungsgemäß einsatzabhängige Vorgabe des Drehmomentes verändert werden. So lässt sich die Vorgabe für ein Rad mit einem Offset-Werte, der dann für jede weitere einsatzabhängige Drehmomentvorgabe mit dieser Erntegutaufnahmevorrichtung beibehalten wird, beaufschlagen. Insbesondere bei einer schlechten Traktion durch besondere Einsatzbeschaffenheiten kann hiermit vorteilhaft abgeholfen werden.

In einer besonderen Ausgestaltung der Erfindung, wird die Traktion mit einem Schlupfsensor erfasst und in die Steuerungseinrichtung eingegriffen wobei eine automatische Anpassung der Schluckvolumenvorgabe erfolgt. Hierzu eignet sich beispielsweise ein Radarsensor, der die tatsächliche Fahrtgeschwindigkeit des Fahrzeuges misst und in Verbindung mit den Raddrehzahlen eine Schlupfermittlung ermöglich. Durch eine Korrektur der Schluckvolumenvorgabe, bei erkanntem Schlupf, lässt sich vorteilhaft das Auftreten von weiterem Schlupf verhindern.

Ein konkretes Ausführungsbeispiel der Erfindung ist in den Zeichnungen rein schematisch dargestellt und wird nachfolgend näher beschrieben. Es zeigt:
- Fig. 1: eine schematische Darstellung eines Antriebssystems eines allradbetriebenen Fahrzeuges, insbesondere einer selbstfahrenden landwirtschaftlichen Erntemaschine mit einer elektronischen Steuerungseinrichtung für die Antriebseinheiten, und
- Fig.2: eine perspektivische Darstellung einer erfindungsgemäßen elektronischen Steuerungseinrichtung in eines weiteren Ausführungsbeispiel eines Fahrantriebes.

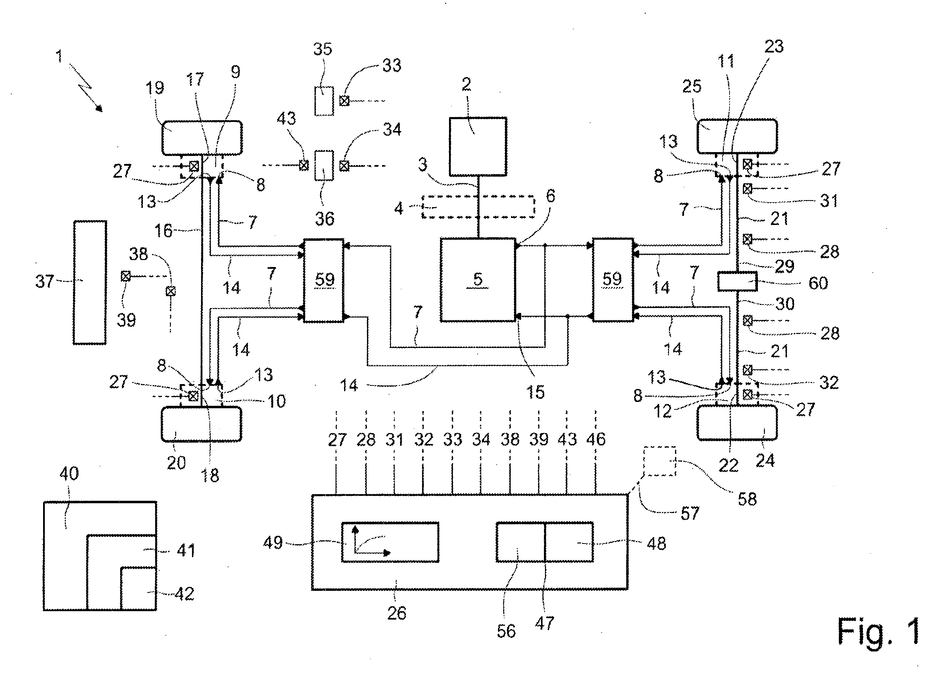

Die Fig. 1 zeigt in schematischer Darstellung eine Ausführungsform einer Antriebseinheit eines Allradfahrzeuges, insbesondere einer selbstfahrenden landwirtschaftlichen Erntemaschine 1 mit einer erfindungsgemäßen elektronischen Steuerungseinrichtung 26 für die hydraulischen Antriebseinheiten des Fahrantriebes, Die Erntemaschine 1 weist einen (nicht dargestellten) Rahmen oder ein selbstragendes Chassis auf, der sich auf vorderen Rädern 19,20 und hinteren Rädern 24,25 abstützt, die sich im Eingriff mit dem Boden befinden. Die hinteren Rädern 24,25 sind in der Regel lenkbar angeordnet, während die vorderen Räder 19,20 einen größeren Reifendurchmesser als die hinteren Räder 24,25 aufweisen und den größeren Teil des Gewichtes des Fahrzeuges tragen, insbesondere in der Ausführungsform einer Erntemaschine 1, beispielsweise eines Mähdreschers. Die Vorderräder 19,20 einer Erntemaschine 1 können aber auch aus jeweils einem Raupenlaufwerk (nicht dargestellt) bestehen, wobei jeweils ein Laufwerk einem Antriebsrad 19,20 vorne entspricht, Aufgrund der unterschiedlichen Gewichtsverteilung des Fahrzeuges auf die vordere 16 und hintere Achse 21 erfolgt auch eine unterschiedliche Traktion an den vorderen 19,20 und hinteren Antriebsrädern 24,25. Die an der vorderen Achse 16 angeordnete Antriebsräder 19,20 sind aufgrund der größeren Radlast traktionsunkritischer als die an der hinteren Lenkachse 21 angeordneten Antriebsräder 24,25.

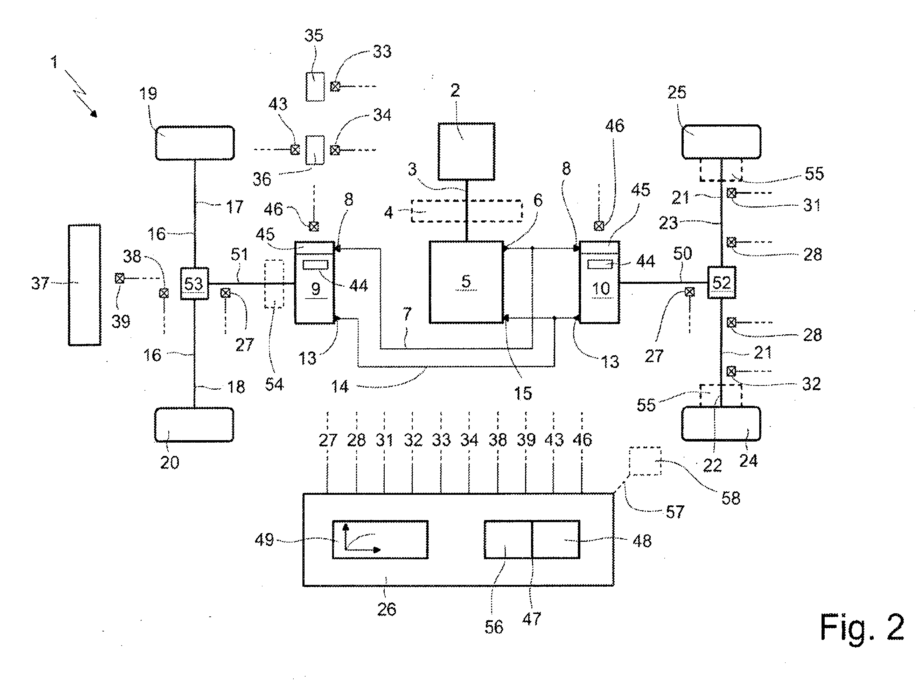

Die Antriebseinheit umfasst einen Hauptmotor 2 in Ausführung eines Verbrennungsmotors, vorzugsweise eines Dieselmotors, der verschiedene Gutbearbeitungs- und Fördereinrichtungen und den Fahrantrieb der Erntemaschine 1 antreibt. Der Antrieb der Fahrantriebe erfolgt über eine Welle 3 des Hauptmotors 2 zur Hydraulikpumpe 5, deren Fluidverdrängung durch eine Schwenkscheibe (siehe Fig.2) mechanische Leistung in hydraulische Leistung (Druck x Volumenstrom) umwandelt, wobei die Schwenkscheibe gesteuert werden kann. Auf die Steuerung der Hydraulikpumpe 5 soll hier nicht näher eingegangen werden, weil als bekannt vorausgesetzt. Zwischen dem Hauptmotor 2 und der Hydraulikpumpe 5 kann sich alternativ noch ein Getriebe 4 (gestrichelt dargestellt) befinden. Die Hydraulikpumpe 5 weist einen Auslass 6 und einen Einlass 15 auf. Der Auslass 6 ist als Zulauf über Hydraulikleitungen 7 und einem Verteiler 59, mit dem Einlass 8 der Hydraulikmotoren 9, 10,11, 12 verbunden, während der Auslass 13 der Hydraulikmotoren 9,10,11,12 über Hydraulikleitungen 14 als Rücklauf mit dem Einlass 15 der Hydraulikpumpe 5 rückgekoppelt ist. Zwei der Hydraulikmotoren 9,10 sind an der vorderen Achse 16 angeordnet, wobei jeder Hydraulikmotor 9,10 über eine Antriebswelle 17,18 mit einem Vorderrad 19,20 verbunden ist. Die beiden Hydraulikmotoren 11,12 befinden sich an der Hinterachse 21 und sind über eine Antriebswelle 22,23 mit den Hinterrädern 24,25 verbunden. Bei der Hinterachse 21 handelt es sich vorzugsweise um eine Pendelachse, die als starre Achse ausgeführt ist und beide Hinterräder 24,25 aufnimmt. Die starre Achse ist mittig unter dem Heck der Erntemaschine 1 angeordnet und mittels eines in Fahrtrichtung ausgerichteten Bolzens 60 am Maschinenrahmen befestigt. Dieser Bolzen 60 ermöglicht das Pendeln der Achse 21 quer zur Fahrtrichtung und kann zur Ermittlung der Achslast als Messbolzen ausgestattet sein.

Eine Steuerungseinrichtung 26 ist mit einer Vielzahl von in der Erntemaschine 1 angeordneten Sensoren verbunden, um deren Signale 56 zur Verarbeitung aufzunehmen, Die Sensoren kontrollieren die Veränderungen der dynamischen Maschinenparameter. Einige dieser Sensoren betreffen die Drehzahlsensoren 27, die an den Antriebswellen 17,18,22,23 angeordnet sind und bei jeder Umdrehung einer Antriebswelle 17,18,22,23, oder mehrmals pro Umdrehung, einen Impuls abgeben. An der Hinterachse 21, die lenkbar ausgestaltet ist, befinden sich Sensoren 28, welche den aktuellen Lenkungswinkel erfassen, wobei die Hinterachse 21 zwei geteilt und als Pendelachse 29,30 ausgelegt ist. Die Pendelachsen 29,30 sind mit Sensoren 31,32 ausgestattet, welche die Pendelstellung der Achsen 29,30 kontrollieren, An der starren Vorderachse 16 ist ein Quer- und Längsneigungssensor 38 angeordnet, der Signale 56 für die Seitenhang- oder Bergauf- und Bergabfahrt liefert, Weitere Sensoren 33,34 ermitteln den Füllstand des Treibstoff- Tankbehälters 35 und des Korntanks 36. Auch die Bewegung, Heben und Senken eines Vorsatzgerätes, beispielsweise einer Erntegutaufnahmevorrichtung 37 wird über einen Bewegungssensor 39 erfasst und dessen Signal 56 als dynamischer Maschinenparameter in der Steuerungseinrichtung 26 berücksichtigt.

Die Daten 48 der statischen Maschinenparameter werden ebenfalls von der Steuerungseinrichtung 26 erfasst, wobei die Erfassung der Daten 48 teilweise automatisch oder über Bedienfunktionen 42 im Bediensystem 41, angeordnet in der Fahrerkabine 40 der Erntemaschine 1, erfolgt. Die Daten 48 der statischen Maschinenparameter werden überwiegend von den verwendeten Vorrichtungen der Maschinenausstattung vorgegeben. Zu der statischen Maschinenausstattung gehört beispielsweise die an der selbstfahrenden Erntemaschine 1 angeordnete Erntegutaufnahmevorrichtung 37, die mit Angabe der Typbezeichnung, Ausstattung und Arbeitsbreite, und somit mit unterschiedlichen Maschinenparametern, automatisch in die Steuerungseinrichtung 26 eingeht. In einer Weiterbildung der Erfindung kann ein hier nicht näher gezeigter Sensor an der Erntemaschine 1 angebaut sein, der die im Ernteeinsatz verwendete Emtegutaufnahmevorrichtung 37 automatisch erkennt und an die Steuerungseinrichtung 26 meldet. Ferner kann die Erntegutaufnahmevorrichtung 37 mit einem eigenen Elektronikmodul ausgestattet sein, welches dann seine Kennung über beispielsweise ein Datenbusanbindung an die Steuerungseinrichtung 26 übergibt. Die wechselbaren Erntegutaufnahmevorrichtungen 37 bestimmen deutlich die Rad- bzw. Achslast an den Antriebsrädern 19,20,24,25 und nehmen ebenfalls Einfluss auf die Traktion und das Schlupfverhalten der Antriebsräder 19,20,24,25. So werden bei einem Wechsel der Erntegutaufnahmenvorrichtung 37, beispielsweise wird ein Pick- Up (Grasaufnehmer) gegen ein Maisgebiss (Maisaufnehmer) ausgetauscht, automatisch an den Hydraulikmotoren 9,10,11,12 veränderte Vorgaben für das Drehmoment durch die Steuerungseinrichtung 26 eingestellt.

Auch der Maschinentyp des Fahrzeuges, sowie dessen Motorausstattung 2 werden mit unterschiedlichen Maschinenparametern durch Programmierung der Software 47 in der Steuerungseinrichtung 26, vor Inbetriebnahme des Fahrzeuges, berücksichtigt. Weitere statische Maschinenparameter, die als Daten 48 in die Software 47 der Steuerungseinrichtung 26 eingehen, sind Zusatzgewichte, die beispielsweise aus der unterschiedlichen technischen Ausstattung der Erntemaschine 1 im Heck, beispielsweise durch Strohhäcksler und Spreuverteiler, resultieren. Des weiteren wird automatisch der Maschinenparameter der zu verarbeitenden Erntegutart berücksichtigt, weil zwischen Gras, Mais und Getreide sich wesentliche Unterschiede beim Gewicht für die Radlast und der Traktion ergeben, wobei auch der Feuchtigkeitsgehalt des Erntegutes durch einen Feuchtigkeitssensor 43 ermittelt wird, Natürlich wird auch die Bodenbeschaffenheit bei der Ernteaufnahme als Parameter berücksichtigt, ob feuchter, schwerer oder harter, trockner Boden oder ähnliche Verhältnisse vorliegen. Die Bodenbeschaffenheit kann von dem Maschinenbediener abgeschätzt und über das Bedienersystem eingegeben werden. Weiterhin kann die Bodenbeschaffenheit durch eine Lernroutine erfasst werden, indem über eine gewisse Zeit die Antriebseinheit des Fahrzeugs mit überschiedlichen Drehmomentvorgaben gefahren wird und eine Vorgabe des Drehmomentes manuell oder automatische ausgewählt wird, bei der eine gute Traktion ohne Schlupf erzielt werden konnte. Die elektronische Steuerungseinrichtung 26 erfasst zu dieser ermittelten Vorgabe des Drehmoments sämtliche weitere Maschinenparameter und steuert dann die Drehmomentvorgabe ausgehend von dem gelernten Wert erfindungsgemäß einsatzabhängig.

Weitere Maschinenparameter können aus anderen im Fahrzeug vorhandenen Steuerungseinrichtungen 58 entnommen werden und in die Steuerungseinrichtung 26 mit einfließen und zur Bestimmung einer optimalen Leistungskurve 49 nützlich sein.

Aus den ermittelten statischen und dynamischen Maschinenparametern werden anhand der Steuerungseinrichtung 26 Werte für eine Vorgabe des Drehmoments berechnet, woraus eine Leistungskurve 49 für die Hydraulikmotoren 9,10,11,12 bestimmt wird. Aus der Leistungskurve 49 wird das Schluckvolumen für die Hydraulikmotoren 9,10,11,12 vorgegeben. Die Steuerung der Schluckvolumenvorgabe erfolgt durch Regeln des hydraulischen Verstellmotors bzw. der Schwenkscheibe 44 der Hydraulikmotoren 9,10,11,12. In einigen Systemen erfolgt das Regeln der Verstellmotoren über Schwenkscheiben bzw. Taumelscheiben. Zur Verstellung der Schwenkscheibe 44 steht eine Verstelleinrichtung 45 (siehe Fig.2) zur Verfügung, welche die vorgegebene Bewegung von der Steuerungseinrichtung 26 auf die Schwenkscheibe 44 überträgt, wobei die Verstelleinrichtung 45 vorzugsweise aus einem elektromechanischen Aktor bestehen kann. Ein Sensor 46 erfasst die aktuelle Stellung der Verstelleinrichtung 45, wodurch eine Rückkopplung in die Steuerungseinrichtung 26 und eine Kontrolle einer Drehmomentvorauswahl bzw. einer Schluckvolumenvorgabe erfolgt. Die Schwenkscheibe 44 der Hydraulikmotoren 9,10,11,12 wird somit aufgrund der ermittelten und ausgewerteten radlastabhängig Maschinenparameter über die in der Steuerungseinrichtung 26 enthaltenen Leistungskurve 49 gesteuert, wodurch sich ein regelbares Schluckvolumen ergibt, Über das in der Fahrerkabine 40 angeordnete Bedienersystem 41, kann der Fahrer manuell in die Steuerungseinrichtung 26 eingreifen und die Leistungskurve 49 bzw. das automatisch vorgegebene Drehmoment, für einen oder mehrere Hydraulikmotoren 9,10,11,12, mit einem Offset verschieben. Die Verschiebung kann über eine Bedienfunktion 42, beispielsweise über ein Drehpotentiometer erfolgen, wodurch die Leistungskurve 49 erhöht oder erniedrigt werden kann.

Aus der Fig.2 ist in perspektivischer Darstellung die erfindungsgemäße elektronische Steuerungseinrichtung 26 in einer weiteren Ausführungsform eines Fahrantriebes ersichtlich. Beschreibungen und Angaben zum Fahrantrieb und zur Steuerungseinrichtung 26 die identisch in der Fig.1 enthalten sind, werden in Fig.2 nicht wiederholt aufgeführt und sind bei übereinstimmenden Elementen mit denselben Bezugszeichen gekennzeichnet. Der wesentliche Unterschied zum Fahrantrieb aus der Fig. 1 besteht darin, dass der in Fig.2 aufgezeigte Allrad- Fahrantrieb nur zwei Hydraulikmotoren 9,10 umfasst, die jeweils mit einer Antriebswelle 22,23 ein Differerizialgetriebe 52,53 antreiben. Der erste Hydraulikmotor 10 treibt über eine erste Antriebswelle 50 und ein erstes selbstsperrendes Differenzialgetriebe 52 die beiden hinteren Räder 24,25 an, Der zweite Hydraulikmotor 9 treibt über eine zweite Antriebswelle 51 und ein zweites selbstsperrendes Differenzialgetriebe 53 die beiden vorderen Räder 19,20 an. Der erste Hydraulikmotor 10 kann wahlweise ein- oder ausschaltbar sein, sodass ein Vierradantrieb vorzugsweise nur im Erntebetrieb wo ein besseres Traktionsvermögen benötigt wird, zugeschaltet ist und bei normaler Straßenfahrt ausgeschaltet. Zwischen dem zweiten Hydraulikmotor 9 und dem zweiten Differenzialgetriebe 53 kann ein Schaltgetriebe 54 (gestrichelt dargestellt) mit unterschiedlichen, wählbaren Übersetzungsstufen vorhanden sein. Zum Rückwärtsfahren kann das Schaltgetriebe 54 einen Rückwärtsgang aufweisen. Auf die weiteren alternativen zur Rückwärtsfahrt soll hier nicht näher eingegangen werden. Alternativ kann, im Heck der Erntemaschine 1, anstelle des ersten Hydraulikmotors 10 und dem ersten Differenzialgetriebe 52 an den hinteren Antriebsrädern 25,26 der starren Lenkachsen 21, jeweils ein hydraulischer Radnabenmotor 55 (gestrichelt dargestellt) angeordnet sein,

Die Steuerungseinrichtung 26 ist, wie in Fig.1 aufgezeigt, mit einer Vielzahl von Sensoren verbunden, um die dynamischen Maschinenparameter zu ermitteln. Die Steuerungseinrichtung 26 berechnet, wie in Fig.1 angegeben, aus der Summe der der Daten 48 der statischen Maschinenparameter und der Summe der Signale 56 der Sensoren, der dynamischen Maschinenparameter, die Drehmomentvorauswahl, woraus eine Leistungskurve 49 berechnet wird, aus welcher die Vorgabe für das Schluckvolumen für die Hydraulikmotoren 9,10 bestimmt wird, Mit der zuvor aufgezeigten erfindungsgemäßen Steuerungseinrichtung 26 ist eine Steuerung der Allradfunktion an selbstfahrenden Erntemaschinen 1 mit hydrostatisch angetriebenen Antriebsrädern 19,20,24,25 derart möglich, das einsatzabhängig einerseits immer eine optimale Traktion für die Hydraulikmotoren 9,10,11,12 zur Verfügung steht und andererseits ein Schupfen der Antriebsräder 19,20,24,25 vermieden werden kann. Zur Vermeidung und Erkennung von Schlupf, kann optional ein oder mehrere, in den Maschinenkörper eingebaute Schlupfsensoren (nicht dargestellt), wie beispielsweise ein Radarsensor, eingesetzt werden, Die Radarsensoren ermitteln die tatsächliche Fahrgeschwindigkeit des Fahrzeugs und erkennen in Verbindung mit wenigstens einer Drehzahlen eines Rades 19,20,24,25 Schlupf an wenigstens einem Rad 19,20,24,25 oder kontrollieren die Antriebsräder 19,20,24,25 direkt und greifen bei auftretenden Schlupf automatisch in die Steuerungseinrichtung 26 ein. Der Eingriff in die Steuerungseinrichtung 26 bewirkt eine Veränderung der Leistungskurve 49, wodurch eine Verschiebung der Vorgabe des Drehmoments erfolgt. Bei auftretenden Schlupf erfolgt kurzfristig eine Verschiebung der Schluckvolumenvorgabe nach unten, welches eine Absenkung des Raddrehmomentes und damit des Schlupfes bewirkt. Befinden sich die Antriebsräder 19,20,24,25 wieder im Eingriff mit dem Boden, wird automatisch die Drehmomentvorgabe wieder angehoben. Die Radarsensoren werden somit über die Steuerungseinrichtung 26 mit zur Regelung der Antriebsmotoren 9,10,11,12 herangezogen. Selbstverständlich können die im Stand der Technik genannten Einrichtungen wie ABS, VDC, TCS, ASR, ESP weiterer Bestandteil der elektronischen Steuerung für die Antriebseinheit des erfindungsgemäß ausgestatteten Fahrzeugs sein.

In einer weiteren vereinfachten Ausführungsform, welche im Prinzip der Figur 2 entspricht, entfällt der Hydraulikmotor 9. Der hydraulische Antrieb der Erntemaschine 1 an der Vorderachse 16 erfolgt dabei direkt über einen mechanischen Hauptantrieb 2 auf das Differenzialgetriebe 53 oder über das zwischen Hauptmotor 2 und dem Differenzialgetriebe 53 angeordnete Getriebe 4 auf die Vorderräder 19,20 oder auf die angetriebenen Umlenkräder eines Raupenlaufwerkes. Die an der gesteuerten Hinterachse 21 angeordneten Hinterräder 24,25, werden erfindungsgemäß, durch die Vorwahl eines Schluckvolumens angetriebene hydrostatischen Radnabenmotoren 55 angetrieben. Die Hinterräder 24,25 sind vorzugsweise an einer starren Pendelachse angeordnet sind, die das Pendeln der Hinterachse 21 quer zur Fahrtrichtung der Erntemaschine 1 ermöglicht.

### Bezugszeichenliste :

- 1: Erntemaschine
- 2: Hauptmotor
- 3: Welle
- 4: Getriebe
- 5: Hydraulikpumpe
- 6: Auslass (Pumpe)
- 7: Hydraulikleitungen (Zulauf)
- 8: Einlass (Motor)
- 9: Hydraulikmotor
- 10: Hydraulikmotor
- 11: Hydraulikmotor
- 12: Hydraulikmotor
- 13: Auslass (Motor)
- 14: Hydraulikleitungen (Rücklauf)
- 15: Einlass (Pumpe)
- 16: Vorderachse
- 17: Antriebswelle (v.r.)
- 18: Antriebswelle (v.l.)
- 19: Vorderrad (v.r)
- 20: Vorderrad (v.l.)
- 21: Hinterachse
- 22: Antriebswelle (h.l.)
- 23: Antriebswelle (h.r.)
- 24: Hinterrad (h.l.)
- 25: Hinterrad (h.r.)
- 26: Steuerungseinrichtung
- 27: Drehzahlsensoren
- 28: Lenkwinkelsensor
- 29: Pendelachse (re)
- 30: Pendelachse (Ii)
- 31: Sensor (Pendelachse re)
- 32: Sensor (Pendelachse li)
- 33: Füllstandssensor(Tank)
- 34: Füllstandssensor (Korntank)
- 35: Tankbehälter
- 36: Korntank
- 37: Erntegutaufnahmevorrichtung
- 38: Quer- u. Längsneigungssensor
- 39: Bewegungssensor
- 40: Fahrerkabine
- 41: Bedienersystem
- 42: Bedienfunktionen
- 43: Feuchtigkeitssensor
- 44: Schwenkscheibe
- 45: Verstelleinrichtung
- 46: Sensor
- 47: Software
- 48: Daten
- 49: Leistungskurve
- 50: Antriebswelle
- 51: Antriebswelle
- 52: Differenzialgetriebe
- 53: Differenzialgetriebe
- 54: Schaltgetriebe
- 55: Radnabenmotor
- 56: Signale
- 57: Maschinenparameter
- 58: Steuerungseinrichtung
- 59: Verteiler
- 60: Bolzen

## Patentansprüche

1. Elektronische Steuerungseinrichtung (26) für eine Antriebseinheit eines Fahrzeuges, insbesondere selbstfahrende landwirtschaftliche Erntemaschine (1) mit Allradantrieb, bestehend aus einem Hauptmotor (2), einer Hydraulikpumpe (5) und mindestens einem Hydraulikmotor (9,10,11,12), der mindestens ein Rad (19,20,24,25) antreibt, welches mit dem Boden im Eingriff steht,
**dadurch gekennzeichnet, dass**
eine Optimierung der Traktion und Verhinderung des Schlupfes an wenigstens einem Rad (19,20,24,25) durch eine einsatzabhängige Vorgabe des Drehmomentes am Hydraulikmotor (9,10,11,12) erfolgt,
statische und dynamische Maschinenparameter (27,28,31,32,33,34,38,39,43,46) ermittelt werden, die die Ausstattung und die Einsatzbedingungen des Fahrzeugs umfassen, wobei zumindest eine der Einsatzbedingungen der Feuchtegehalt (43) des Erntegutes ist,
und dass aus den ermittelten statischen und dynamischen Maschinenparametern anhand der Steuereinrichtung (26) Werte für die Vorgabe des Drehmoments berechnet werden.

2. Elektronische Steuerungseinrichtung für eine Antriebseinheit eines Fahrzeuges nach Anspruch 1,
**dadurch gekennzeichnet, dass**
die einsatzabhängige Vorgabe des Drehmomentes am Hydraulikmotor (9,10,11,12) durch eine Schluckvolumenvorgabe am Hydraulikmotor (9,10.11,12) erfolgt.

3. Elektronische Steuerungseinrichtung für eine Antriebseinheit eines Fahrzeuges nach Anspruch 1 bis 2,
**dadurch gekennzeichnet, dass**
die Schluckvolumenvorgabe durch Erfassung von Daten (48) und/ oder von durch Sensoren abgegebene Signale (56) gebildet wird.

4. Elektronische Steuerungseinrichtung für eine Antriebseinheit eines Fahrzeuges nach Anspruch 1 bis 3,
**dadurch gekennzeichnet, dass**
die Daten (48) aus statischen Maschinenparametern und die Signale (56) aus dynamischen Maschinenparametern gebildet werden.

5. Elektronische Steuerungseinrichtung für eine Antriebseinheit eines Fahrzeuges nach mindestens einem der vorhergehenden Ansprüche,
**dadurch gekennzeichnet, dass**
die statischen Maschinenparameter aus der Maschinenausstattung ermittelt werden.

6. Elektronische Steuerungseinrichtung für eine Antriebseinheit eines Fahrzeuges nach mindestens einem der vorhergehenden Ansprüche,
**dadurch gekennzeichnet, dass**
die dynamischen Maschinenparameter aus der veränderlichen Masse, der Richtung und/oder Fahrgeschwindigkeit des Fahrzeuges ermittelt werden.

7. Elektronische Steuerungseinrichtung für eine Antriebseinheit eines Fahrzeuges nach mindestens einem der vorhergehenden Ansprüche,
**dadurch gekennzeichnet, dass**
die erfassen Daten (48) und/oder die Signale (56) in einer elektronischen Steuerungseinrichtung (26) ausgewertet werden, woraus sich Werte für die Drehmomentvorauswahl ergeben.

8. Elektronische Steuerungseinrichtung für eine Antriebseinheit eines Fahrzeuges nach mindestens einem der vorhergehenden Ansprüche,
**dadurch gekennzeichnet, dass**
mit den errechneten Werten der Drehmomentvorauswahl eine Leistungskurve (49) für die Hydraulikmotoren (9,10,11,12) bestimmt wird, die das Schluckvolumen für mindestens einen Hydraulikmotor (9,10,11.12) vorgibt.

9. Elektronische Steuerungseinrichtung für eine Antriebseinheit eines Fahrzeuges nach mindestens einem der vorhergehenden Ansprüche,
**dadurch gekennzeichnet, dass**
die Leistungskurve (49) eine radlastabhängige Leistungskurve (49) bildet und zur Einstellung des Antriebsdrehmoments durch Steuerung des Schluckvolumens mindestens eines hydrostatisch angetriebenen Rades (19,20,24,25) dient.

10. Elektronische Steuerungseinrichtung für eine Antriebseinheit eines Fahrzeuges nach mindestens einem der vorhergehenden Ansprüche,
**dadurch gekennzeichnet, dass**
die Leistungskurve (49) Angaben enthält, die auf die veränderliche Traktions- und Schlupfsituation jedes einzelnen Antriebsrades (19, 20,24,25) eingeht.

11. Elektronische Steuerungseinrichtung für eine Antriebseinheit eines Fahrzeuges nach mindestens einem der vorhergehenden Ansprüche,
**dadurch gekennzeichnet, dass**
die Steuerungseinrichtung (26) die Radlast wenigstens eines hydrostatisch angetriebenen Rades (19,20,24,25) indirekt bestimmt und das Raddrehmoment in Abhängigkeit von der ermittelten Radlast eingestellt wird.

12. Elektronische Steuerungseinrichtung für eine Antriebseinheit eines Fahrzeuges nach mindestens einem der vorhergehenden Ansprüche,
**dadurch gekennzeichnet, dass**
über ein Bedienersystem (41) in die Steuerungseinrichtung (26) eingegriffen und die Leistungskurve (49) manuell verändert wird, wodurch eine Anpassung der Vorgabe des Schluckvolumens erfolgt.

13. Elektronische Steuerungseinrichtung für eine Antriebseinheit eines Fahrzeuges nach mindestens einem der vorhergehenden Ansprüche,
**dadurch gekennzeichnet, dass**
über wenigstens ein Schlupfsensor in die Steuerungseinrichtung (26) eingegriffen und eine automatische Anpassung der Schluckvolumenvorgabe erfolgt.

## Claims

1. An electronic control device (26) for a drive unit of a vehicle, in particular a self-propelled agricultural harvesting machine (1) with all-wheel drive, comprising a main engine (2), a hydraulic pump (5) and at least one hydraulic motor (9, 10, 11, 12) driving at least one wheel (19, 20, 24, 25) which is in engagement with the ground,
**characterised in that**
optimisation of traction and preventing slip at at least one wheel (19, 20, 24, 25) is effected by use-dependent presetting of the torque at the hydraulic motor (9, 10, 11, 12),
static and dynamic machine parameters (27, 28, 31, 32, 33, 34, 38, 39, 43, 46) are ascertained, which include the equipment and the conditions of use of the vehicle, wherein at least one of the use conditions is the moisture content (43) of the crop material, and
values for the presetting of torque are calculated from the ascertained static and dynamic machine parameters with the aid of the control device (26).

2. An electronic control device for a drive unit of a vehicle according to claim 1 **characterised in that** the use-dependent presetting of the torque is effected at the hydraulic motor (9, 10, 11, 12) by an intake volume presetting at the hydraulic motor (9,10,11,12).

3. An electronic control device for a drive unit of a vehicle according to claims 1 and 2 **characterised in that** the intake volume presetting is formed by detection of data (48) and/or of signals (56) delivered by sensors.

4. An electronic control device for a drive unit of a vehicle according to claims 1 to 3 **characterised in that** the data (48) are formed from static machine parameters and the signals (56) are formed from dynamic machine parameters.

5. An electronic control device for a drive unit of a vehicle according to at least one of the preceding claims **characterised in that** the static machine parameters are ascertained from the machine equipment.

6. An electronic control device for a drive unit of a vehicle according to at least one of the preceding claims **characterised in that** the dynamic machine parameters are ascertained from the variable mass, the direction and/or the travel speed of the vehicle.

7. An electronic control device for a drive unit of a vehicle according to at least one of the preceding claims **characterised in that** the detected data (48) and/or the signals (56) are evaluated in an electronic control device (26), from which values for torque preselection are afforded.

8. An electronic control device for a drive unit of a vehicle according to at least one of the preceding claims **characterised in that** a power curve (49) for the hydraulic motors (9, 10, 11, 12), which predetermines the intake volume for at least one hydraulic motor (9, 10, 11, 12) is determined with the calculated values of torque preselection.

9. An electronic control device for a drive unit of a vehicle according to at least one of the preceding claims **characterised in that** the power curve (49) forms a wheel load-dependent power curve (49) and serves to adjust the drive torque by controlling the intake volume of at least one hydrostatically driven wheel (19,20,24,25).

10. An electronic control device for a drive unit of a vehicle according to at least one of the preceding claims **characterised in that** the power curve (49) contains data giving details of the variable traction and slip situation of each individual drive wheel (19, 20, 24, 25).

11. An electronic control device for a drive unit of a vehicle according to at least one of the preceding claims **characterised in that** the control device (26) indirectly determines the wheel load of at least one hydrostatically driven wheel (19, 20, 24, 25) and the wheel torque is adjusted in dependence on the ascertained wheel load.

12. An electronic control device for a drive unit of a vehicle according to at least one of the preceding claims **characterised in that** intervention in the control device (26) is implemented by way of an operator system (41) and the power curve (49) is manually changed, thereby effecting adaptation of the presetting of the intake volume.

13. An electronic control device for a drive unit of a vehicle according to at least one of the preceding claims **characterised in that** intervention in the control device (26) is implemented by way of at least one slip sensor and automatic adaptation of the intake volume presetting is effected.

## Revendications

1. Dispositif de commande électronique (26) pour une unité d'entraînement d'un véhicule, notamment d'une machine agricole de récolte (1) automotrice dont toutes les roues sont motrices et qui comprend, un moteur principal (2), une pompe hydraulique (5) et au moins un moteur hydraulique (9, 10, 11, 12) entraînant au moins une roue (19, 20, 24, 25) qui est en prise avec le sol,
**caractérisé en ce que** la traction est optimisée et que le glissement est empêché sur au moins une roue (19, 20, 24, 25) en prescrivant pour le moteur hydraulique (9, 10, 11, 12) une consigne de couple de rotation dépendant de l'utilisation, des paramètres de machine (27, 28, 31, 32, 33, 34, 38, 39, 43, 46), statiques et dynamiques sont déterminés, comprenant l'équipement et les conditions d'utilisation du véhicule, l'une au moins de ces conditions étant la teneur en humidité (43) du produit récolté, et qu'à partir des paramètres statiques et dynamiques déterminés, le dispositif de commande (26) calcule des valeurs de consigne du couple de rotation.

2. Dispositif de commande électronique pour une unité d'entraînement d'un véhicule selon la revendication 1, **caractérisé en ce que** la consigne dépendant de l'utilisation, du couple de rotation pour le moteur hydraulique (9, 10, 11, 12) résulte d'une consigne de cylindrée du moteur hydraulique.

3. Dispositif de commande électronique pour une unité d'entraînement d'un véhicule selon la revendication 1 ou 2, **caractérisé en ce que** la consigne de cylindrée est établie par saisie de données (48) et/ou par des signaux (56) délivrés par des capteurs,

4. Dispositif de commande électronique pour une unité d'entraînement d'un véhicule selon une des revendications 1 à 3, **caractérisé en ce que** les données (48) sont établies à partir de paramètres statiques de machine, tandis que les signaux (56) sont établis à partir de paramètres dynamiques de machine.

5. Dispositif de commande électronique pour une unité d'entraînement d'un véhicule selon au moins une des revendications précédentes, **caractérisé en ce que** les paramètres statiques de machine sont établis à partir de la configuration de la machine.

6. Dispositif de commande électronique pour une unité d'entraînement d'un véhicule selon au moins une des revendications précédentes, **caractérisé en ce que** les paramètres dynamiques de machine sont établis à partir de la masse variable, de la direction et/ou de la vitesse de déplacement du véhicule.

7. Dispositif de commande électronique pour une unité d'entraînement d'un véhicule selon une des revendications précédentes, **caractérisé en ce que** les données saisies (48) et/ou les signaux (56) font l'objet, dans la commande électronique (26), d'un traitement à partir duquel sont établies des valeurs servant à la présélection du couple de rotation.

8. Dispositif de commande électronique pour une unité d'entraînement d'un véhicule selon une des revendications précédentes, **caractérisé en ce qu'**à partir des valeurs calculées du couple de rotation présélectionné, est établie, pour les moteurs hydrauliques (9, 10, 11, 12) une courbe de puissance (49) qui prescrit la cylindrée pour au moins un moteur hydraulique (9, 10, 11, 12).

9. Dispositif de commande électronique pour une unité d'entraînement d'un véhicule selon une des revendications précédentes, **caractérisé en ce que** la courbe de puissance (49) est une courbe qui est fonction de la charge de la roue et qui sert à régler le couple d'entraînement en commandant la cylindrée d'au moins une roue (19, 20, 22, 25) entraînée hydrostatiquement.

10. Dispositif de commande électronique pour une unité d'entraînement d'un véhicule selon une des revendications précédentes, **caractérisé en ce que** la courbe de puissance (49) contient des indications qui sont en rapport avec la situation variable, en ce qui concerne la traction et le glissement de chaque roue motrice (19, 20, 24, 25).

11. Dispositif de commande électronique pour une unité d'entraînement d'un véhicule selon une des revendications précédentes, **caractérisé en ce que** le dispositif de commande (26) définit indirectement la charge d'au moins une roue (19, 20, 24, 25) entraînée hydrostatiquement et que le couple de rotation de cette roue est réglé en fonction de la charge ainsi établie.

12. Dispositif de commande électronique pour une unité d'entraînement d'un véhicule selon une des revendications précédentes, **caractérisé en ce qu'**un système opérateur (41) est en prise avec la commande (26) et permet de faire varier à la main la courbe de puissance (49) et d'adapter ainsi la consigne de cylindrée.

13. Dispositif de commande électronique pour une unité d'entraînement d'un véhicule selon une des revendications précédentes, **caractérisé en ce qu'**au moins un capteur de glissement intervient dans le dispositif de commande électronique (26) pour adapter automatiquement la consigne de cylindrée.
